# EUROPEAN PATENT APPLICATION

(11) **EP 3 838 808 A1**
(43) Date of publication of application: **23.06.2021**
(21) Application number: 19383147.6
(22) Date of filing: 19.12.2019
(51) Int. Cl.: B65G 17/08, B65G 17/10, B65G 17/40, B65G 17/46, B65G 21/18, B65G 47/51

(54) **CONVEYOR DEVICE**

(71) Applicant: Innovative Production Systems, S.L., 08243 Manresa (ES)
(72) Inventor: Junyent Masanés, Josep Mª, 08261 Cardona (ES)
(74) Representative: Clarke Modet & Co.

(57) **Abstract**

The invention relates to a conveyor device (1) that comprises a conveyor chain (2) arranged to receive a plurality of products (P), which is configured to transport said products (P) from an entry point (E) to an exit point (S) of the same; and a plurality of diverters (3) arranged at different heights between the entry point (E) and the exit point (S), each one of them configured to make the conveyor chain (2) turn (ω₂), wherein the turns (ω₂) of the conveyor chain (2) are done in the same turn direction, clockwise or counterclockwise, on its path from the entry point (E) to the exit point (S).

## Description

### Field of the invention

The present invention relates to a conveyor device, such as a conveyor, accumulator or dynamic flow regulator, of the type used in a conveyor chain to move products from an entry point to an exit point of the same.

The present invention is especially designed to be applied in the field of production logistics, allowing a wide variety of products to be transported, those products able to be industrial (parts, boxes...) cosmetic (jars, bottles), and/or food-related (bags, bottles, containers...), etc.

### Background of the invention

Conveyor devices of the type indicated allow products to move on a production line between different workstations in a manufacturing process, such processes consisting of filling, packaging, labeling, etc. There are currently several different kinds of conveyor devices that are designed to optimize the performance of said production lines.

Among said devices there are dynamic flow regulators, also known as accumulators or buffers, which form the links between two machines or work stations in a production line, making it so that an interruption and/or variation in the transport flow in one does not affect the flow of the other. To do so they have a conveyor zone and a retention or recovery zone, connected by a single continuous chain, in other words, there are no intermediate transfers in the entire path of the conveyor system. These conveyor chains are generally formed by a plurality of successively joined links with a certain degree of mobility, so that the chain can curve at some parts of the path thereof.

In the conveyor zone, the chain usually has a load, meaning objects arranged on the same to be conveyed between the two stations. Furthermore, in the recovery zone, the chain is empty. Both areas are joined by a moveable carriage that enables the compensation of possible flow variations between the entry and exit. For example, if the speed of the conveyor chain is reduced or stopped at the entry of the device, without stopping or reducing the exit speed, said carriage moves in a direction to reduce the length of the section of the chain of the product zone. However, if the speed of the conveyor chain is reduced or stopped at the exit of the device, without stopping or reducing the entry speed, said carriage moves in an opposite direction to increase the length of the section of the chain of the product zone. This allows the volume of products in the conveyor zone, in other words its capacity, to be adjusted. The greater the volume of products in the conveyor zone, the greater the interruption time, and/or transport flow variation, may be at the affected workstation. In other words, more time is available to reestablish and/or compensate for the transport flow without affecting the rest of the production line.

In any case, the maximum accumulation volume of these regulating devices, as well as of any other conveyor device in general having a long chain, such as a conveyor, is precisely determined by the length of said conveyor chain. The longer the chain, the greater the volume of accumulation.

The dynamic flow regulating device of document ES2400901A1 provides a multilevel solution for multiple levels that allows for the implementation of very long conveyor chains in the smallest space possible. Specifically, said regulator comprises a conveyor chain arranged to receive a plurality of products, which is configured to move through a closed circuit to convey said products from an entry point to an exit point of the same. Diverters arranged at different heights between the entry point and the exit point assist in moving the chain through the curves of its path, making the chain perform a 90° or 180° turn when passing through each one. Each level or floor is formed by a plurality of diverters, all of which are arranged on a horizontal plane with respect to the ground, the different levels of the device constituting different horizontal planes that are parallel to one another. An inclined section joins the upper level to the lower level.

In spite of the high volume of accumulation achieved by this device, it has the particular feature in that the conveyor chain has to make constant changes in its turn direction throughout its path between the entry point and the exit point in order to be able to extend or expand on each one of the horizontal planes that make up the levels or floors. In other words, the conveyor chain makes as many right turns (clockwise) as left turns (counterclockwise). This aspect leads to several drawbacks when conveying products.

One of these drawbacks consists of the destabilization of the products due to the constant changes in direction. Specifically, given that the transport chain must turn both in a clockwise direction and in a counterclockwise direction, it has greater turn mobility, which means there is a greater opening angle between the consecutive links on the curves. In other words, the links separate more when they turn, which destabilizes the support base for the products and, therefore, causes slight displacements of the products. In turn, these displacements can move the products towards the fixed side rails that go along the path of the transport chain, and even result in the products colliding against them and getting stuck. Likewise, the separation between the links can also cause the products being conveyed to become trapped and/or caught, also leading to pileups and/or damage to the same.

Another drawback caused by the changes in the turns of the conveyor chain is the difficulty of using guide elements on the conveyor chain, especially if they laterally protrude from one of the sides thereof. It is not possible because when these extensions are situated on the inner side of the curve, due to the changes in direction, they would interfere and/or collide with each other, preventing the chain from moving forward.

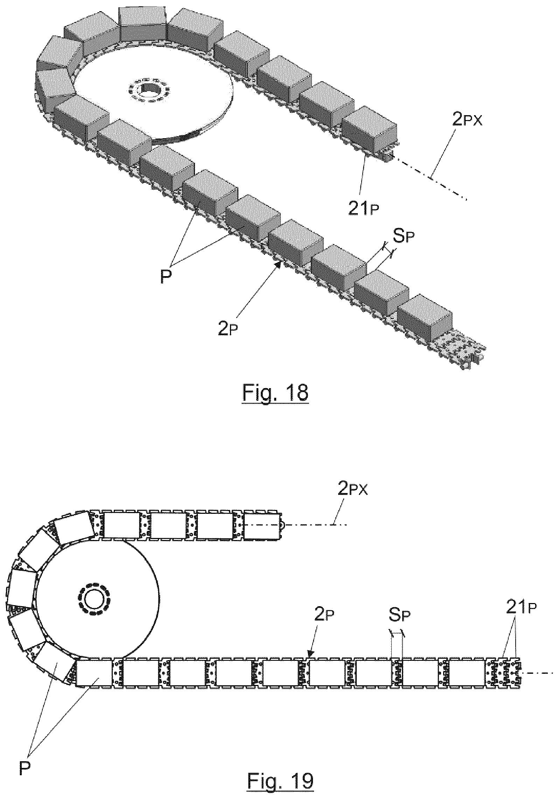

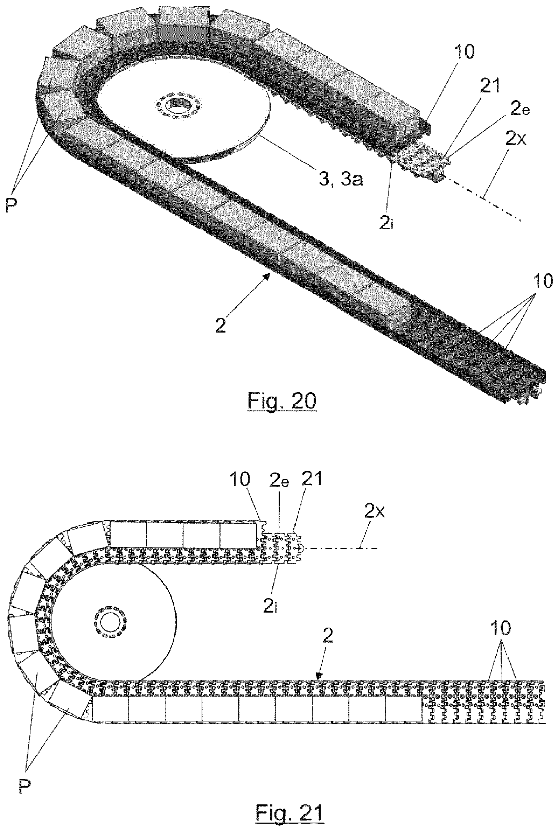

Furthermore, the use of guide elements on conveyor devices is advantageous for several reasons. First of all, they enable the removal of fixed lateral guides or rails throughout the entire path of the chain, which are used to help guide the products being conveyed and/or to prevent the accidental falling of the same, especially when the chain is making a curve. The removal of these fixed lateral guides or rails is of interest because they are usually a direct cause of pileups due to the friction they exert on the products that rub against them. Doing without these rails simplifies the device and makes the conveyor chain more accessible for maintenance and/or repairs. Secondly, said guide elements allow the conveyor space for the products to be wider, if they have a support base that is wider than the chain, allowing larger products to be conveyed, which is especially advantageous for products that are not sturdy. Thirdly, they provide flexibility and adaptability to the conveyor device, given that they can be replaced by other guide elements with a different geometry and/or size to allow other types of products to be conveyed. And lastly, but of no lesser importance, they allow a greater number of products and/or heavier products to be arranged throughout the conveyor chain (Figures 20 and 21), given that they do not pile up at the curves due to a lack of space if they are too close to each other and/or stuck to one another, as occurs with conventional chains (Figures 18 and 19).

The present invention solves the aforementioned problems by means of a conveyor device with a configuration that allows the conveyor chain to have a single turn direction (clockwise or counterclockwise) throughout the entire path thereof from the entry point for the products to the exit point of the same. It thus allows for the integration and/or assembly of fastening elements in an asymmetric arrangement with respect to the axial axis of the conveyor chain, and/or configured to project only on the outer side the same. It allows products to be conveyed and/or to accumulate in a more stable and efficient fashion, without pileups and making better use of the space, which allows greater volumes of products to be arranged.

### Description of the invention

The conveyor device of the present invention comprises:
- a conveyor chain arranged to receive a plurality of products, which is configured to move through a closed circuit to convey said products from an entry point to an exit point of the same; and
- a plurality of diverters arranged at different heights between the entry point and the exit point, each one of which is configured to make the conveyor chain turn.

Said device is characterized in that all the turns of the conveyor chain are done in the same turn direction, clockwise or counterclockwise, in its path from the entry point to the exit point.

The number of diverters and the arrangement of the same determine the path of the transport chain, allowing:
- the conveyor chain to extend vertically (high), ascending or descending to an upper or lower conveyor level, respectively; and/or
- the conveyor chain to extend horizontally (wide), widening its path through the same conveyor level.

Thus, the conveyor chain follows a path in which the different diverters are arranged one after the other in a consecutive fashion.

The consecutive diverters arranged at different heights are joined by inclined sections of the conveyor chain. Said inclined sections can be inclined in their entirety, meaning that they have a constant slope between two consecutive diverters situated at different heights. Or they can be partially inclined, meaning that they also comprise one or more horizontal sections between both diverters.

The consecutive diverters arranged at the same height are joined by horizontal sections of the conveyor chain. The conveyor device preferably comprises at least two diverters arranged at the same height joined by a horizontal section of the conveyor chain, with the aim of horizontally expanding the path of the conveyor chain, in other words the width.

The vertical and horizontal expansions of the conveyor chain respectively determine the number of conveyor levels and the number of channels, parameters which, in turn, determine the conveying capacity of the device, meaning the volume of the products it can accommodate. As was previously mentioned, a conveyor level is understood as each level that can accommodate products, which determines the vertical expansion capacity of the device. And by channel we mean each row or line of the conveyor chain, which determine the horizontal expansion capacity of the device. The conveyor chain is provided with alternating and/or opposite advance directions between adjacent channels.

The conveyor device can comprise one or more conveyor levels and two or more channels, thereby able to have different constructive configurations. However, the configurations with more than one conveyor level and with more than two channels are especially designed to be able to accommodate a greater volume of products.

Preferably, in addition to the conveyor zone, the conveyor device also has a recovery zone, in order to carry out the functions related to the aforementioned accumulator or dynamic flow regulator.

To this end, the conveyor chain is also configured to move from an entry regulation point to an exit regulation point, comprising:
- an entry return section that joins the conveyor chain to the entry point and to the entry regulation point; and
- an exit return section that joins the conveyor chain to the exit point and to the exit regulation point.

It must be mentioned that a single, continuous conveyor chain extends between the conveyor zone and the recovery zone, and begins its path at the entry point of the conveyor zone, moves to the exit point of said zone, turns around on the inner face of the conveyor chain to the exit regulation point, returns to the upper face of the same, where it begins to move through the recovery zone until reaching the entry regulation point, turns around on the inner face of the conveyor chain to return to the entry point, where it begins the path again.

In the recovery zone, the conveyor device also comprises:
- a plurality of regulating diverters arranged at different heights between the entry regulation point and the exit regulation point, each one of which is configured to make the conveyor chain turn.

All of the turns in the conveyor chain are done in the same turn direction, clockwise or counterclockwise, in its path from the entry regulation point to the exit regulation point, said turn direction coinciding with the turn direction of the turns of the conveyor chain in its path from the entry point to the exit point.

The consecutive regulating diverters arranged at different heights are joined by inclined sections of the conveyor chain. Furthermore, the consecutive regulating diverters arranged at the same height are joined by horizontal sections of the conveyor chain.

The conveyor device of the present invention is preferably an accumulator or dynamic flow regulator.

The conveyor chain preferably comprises a plurality of guide elements configured to receive the products. Said guide elements can be arranged continuously throughout the entire conveyor chain, or discontinuously, on some sections of the same.

The guide elements preferably have an asymmetric arrangement with respect to the axial axis of the conveyor chain.

The guide elements preferably project laterally from an outer side of the conveyor chain.

Preferably, the guide elements individually have a wider width than the width of the conveyor chain, and thus they are able to convey larger products.

However, it is worth mentioning the possibility of arranging guide elements on the conveyor chain that individually have a width that is equal to, or even less than, the width of the conveyor chain, also having an asymmetric arrangement with respect to the axial axis of the same. Said off-centering with respect to the axial axis can also be achieved by providing the guide element with a slope that makes the products pass on the outer part of the curves, with the aim of achieving a greater accumulation of products, as shown in figures 20 and 21.

The guide elements can have different geometric configurations, which are preferably complementary and/or designed so that the consecutive guide elements are partially overlapping. This allows the consecutively arranged guide elements to fit and/or couple together in a tighter way, leaving fewer gaps, openings and/or spaces between them. In other words, it provides a better guide for the products and a greater useful support surface to receive the same, in the aim of preventing them from slipping through and/or piling up in the area where the two consecutive guide elements come together. Furthermore, said coupling has a specific play, by means of which a certain angular displacement between the consecutive guide elements is achieved, which is necessary in order for the conveyor chain to be able to make the curves that exist throughout the path thereof.

According to a preferred embodiment, each guide element comprises a support base, configured to receive the products, laterally delimited by an inner wall and an outer wall, configured to prevent products from falling during the transportation thereof, providing a side barrier or rail.

The inner wall preferably comprises:
- an inner overlapping extension configured to overlap with the inner wall of a front fastening element; and
- an inner fitting recess configured to house an inner overlapping extension of a rear fastening element.

This way, the coupling between the consecutive guide elements is devoid of lateral holes or openings on the inner face of the conveyor chain, both on the straight sections and on the curves, thus preventing the products from piling up between them and/or accidentally falling.

The outer wall preferably comprises:
- an outer overlapping extension configured to overlap with the outer wall of a front fastening element; and
- an outer recess configured to house an outer fitting extension of a rear fastening element.

This way, the coupling between the consecutive guide elements is devoid of lateral holes or openings on the outer face of the conveyor chain, both in the straight sections and in the curves, thus preventing the products from piling up between them and/or accidentally falling.

Each guide element preferably comprises:
- a first toothed profile; and
- a second toothed profile opposite the first toothed profile;
wherein both toothed profiles are complementary.

This way, the coupling between the consecutive guide elements will have fewer gaps or spaces on the conveyor chain, thus preventing the products from piling up and/or getting stuck between said guide elements. Additionally, lower protectors may be arranged in the form of a flexible sheet, which extends horizontally below the support base to cover the holes that are opened on the outer part of the conveyor chain when it passes through the curves.

The guide elements can be made up of elements independent from the conveyor chain, configured to be mounted on the same, or can form an integral part of said conveyor chain.

According to a first example, the conveyor chain is formed by a plurality of links, wherein each guide element is configured to be mounted on one or more links of the conveyor chain and to allow for the subsequent disassembly thereof. Therefore, each guide element preferably comprises one or more holes configured for the passage of fastening elements. However, other fastening and/or mounting systems for the conveyor chain can consist of the use of adhesives, staples, etc.

According to a second example, the conveyor chain is formed by a plurality of links, wherein each guide element forms an integral part of a link of the conveyor chain.

### Brief description of the drawings

What follows is a very brief description of a series of drawings that aid in better understanding the invention, and which are expressly related to various embodiments thereof that are presented by way of non-limiting examples of the same.
Figure 1 shows a schematic perspective view of the conveyor device of the present invention arranged in a first position for the accumulation of products, according to a first exemplary embodiment.
Figure 2 shows a schematic perspective view of the conveyor device of the present invention arranged in a second position for the accumulation of products, according to a first exemplary embodiment.
Figure 3 shows a plan view of the conveyor device of figure 1, without showing the moveable carriage.
Figure 4 shows a lower perspective view of the conveyor device of figure 3.
Figure 5 is a perspective view of the conveyor zone of the conveyor device of figure 3.
Figure 6 shows a perspective view of the recovery zone of the conveyor device of figure 3.
Figure 7 shows a schematic perspective view of the conveyor device of the present invention, according to a second exemplary embodiment.
Figure 8 shows a side view of the conveyor device of figure 7.
Figure 9 shows a front view of the conveyor device of figure 7.
Figure 10 shows a schematic perspective view of the conveyor device of the present invention, according to a third exemplary embodiment.
Figure 11 shows a side view of the conveyor device of figure 10.
Figure 12 shows a schematic perspective view of the conveyor device of the present invention, according to a fourth exemplary embodiment.
Figure 13 shows a schematic perspective view of the conveyor device of the present invention, according to a fifth exemplary embodiment.
Figure 14 shows a side view of the conveyor device of figure 13.
Figure 15 shows a partial plan view of the conveyor chain arranged on one of the diverters of the conveyor device, by way of example of the guide elements, applicable to any of the previous embodiments.
Figure 16a shows a first perspective view of a first example of the guide element of the conveyor device for any of the previous embodiments.
Figure 16b shows a second perspective view of the guide element of figure 16a.
Figure 16c is a plan view of the guide element of figure 16a.
Figure 16d shows a front view of the guide element of figure 16a.
Figure 16e shows a side view of the guide element of figure 16a.
Figure 17a shows a first perspective view of a second example of the guide element of the conveyor device for any of the previous embodiments.
Figure 17b shows a second perspective view of the guide element of figure 17a.
Figure 17c shows a plan view of the guide element of figure 17a.
Figure 17d shows a front view of the guide element of figure 17a.
Figure 17e shows a side view of the guide element of figure 17a.
Figure 18 show a schematic perspective view by way of example of the transport of products by means of a conventional conveyor device.
Figure 19 is a plan view of figure 18.
Figure 20 shows a schematic perspective view by way of example of the transport of products by means of the conveyor device of the present invention.
Figure 21 is a plan view of figure 20.

### Detailed description of the invention

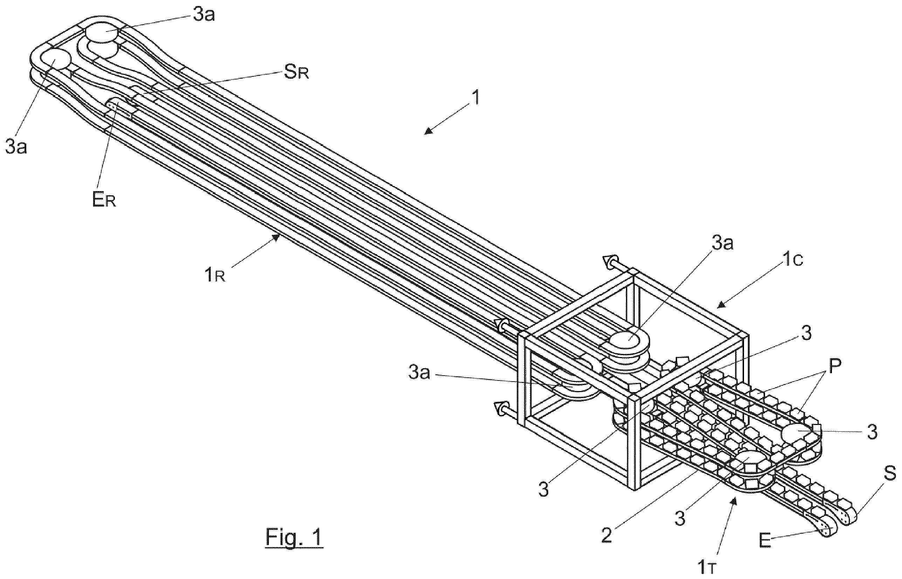

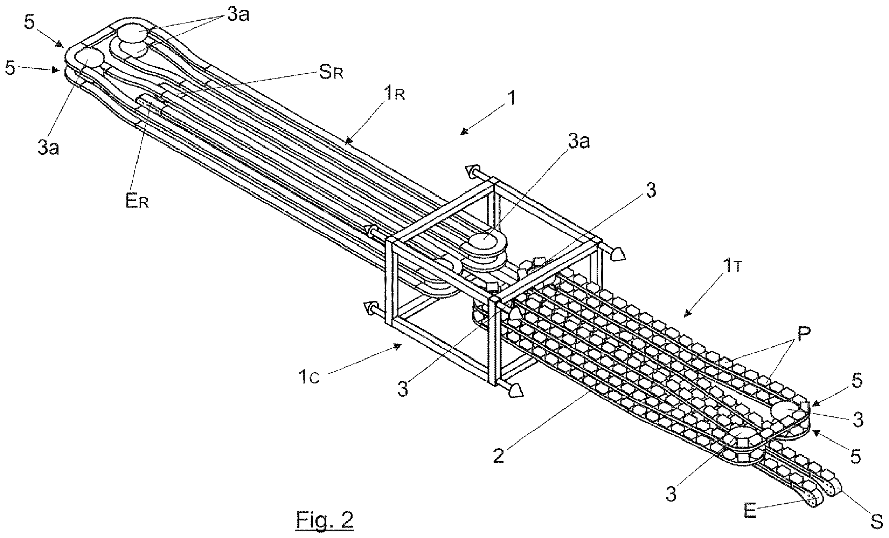

Figures 1 to 6 show different views of the conveyor device (1) of the present invention, according to a first exemplary embodiment. For greater clarity and understanding of the figures, a large part of the structural and functional elements of the conveyor device (1), such as the frame, the casing, the motors and traction elements of the conveyor chain, the sliding guides of the carriage, control elements, etc. have not been illustrated.

In said first example, a dynamic flow regulator is shown, also known as an accumulator or buffer, is shown, made up of a conveyor zone (1T) and a recovery zone (1R), joined by a moveable carriage (1C). In this case, the conveyor device (1) comprises two conveyor levels (5), each one with four channels (4).

As can be seen in figures 1 to 4, the conveyor device (1) comprises:
- a conveyor chain (2) arranged to receive a plurality of products (P), which is configured to move through a closed circuit to convey said products (P) from an entry point (E) to an exit point (S) of the same; and
- a plurality of diverters (3) arranged at different heights between the entry point (E) and the exit point (S), each one of which is configured to make the conveyor chain (2) turn (ω₂).

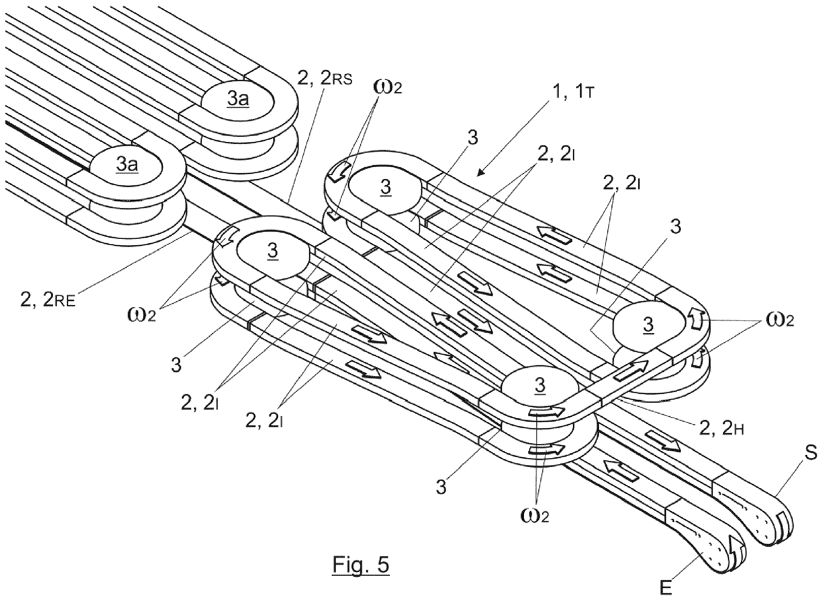

Said device (1) is characterized in that the turns (ω₂) of the conveyor chain (2) are done in the same turn direction, in the case illustrated in figure 5 in a counterclockwise direction, in its entire path from the entry point (E) to the exit point (S).

As can be seen, all of the turns (ω₂) of the conveyor chain (2) in the path from the entry point (E) to the exit point (S) are done on the horizontal plane, with all of them in the same counterclockwise turn direction. In the conveyor entry point (E) and the exit point (S) there are other turns on the vertical plane, these being in the counterclockwise direction and clockwise direction, respectively, to go from the lower face of the conveyor chain (2) to the upper face of the same, and vice versa.

The conveyor chain (2) is also configured to move from an entry regulation point (E_{R}) to an exit regulation point (S_{R}), comprising:
- an entry return section (2_{RE}) that joins the conveyor chain (2) to the entry point (E) and the entry regulation point (E_{R}); and
- an exit return section (2_{RS}) that joins the conveyor chain (2) to the exit point (S) and the exit regulation point (S_{R}).

A single, continuous conveyor chain (2) extends between the conveyor zone (1T) and the recovery zone (1R), which begins its path at the entry point (E) of the conveyor zone, moves to the exit point (S) of said zone, turns around on the inner face of the conveyor chain (2) to the exit regulation point (S_{R}), returns to the upper face of the same, where it begins to move through the recovery zone (1R) until reaching the entry regulation point (E_{R}), turns around on the inner face of the conveyor chain (2) to return to the entry point (E), where it begins the path again.

In the recovery zone (1R), the conveyor device (1) also comprises:
- a plurality of regulating diverters (3a) arranged at different heights between the entry regulation point (E_{R}) and the exit regulation point (S_{R}), each one of which is configured to cause the conveyor chain (2) to turn (ω₂).

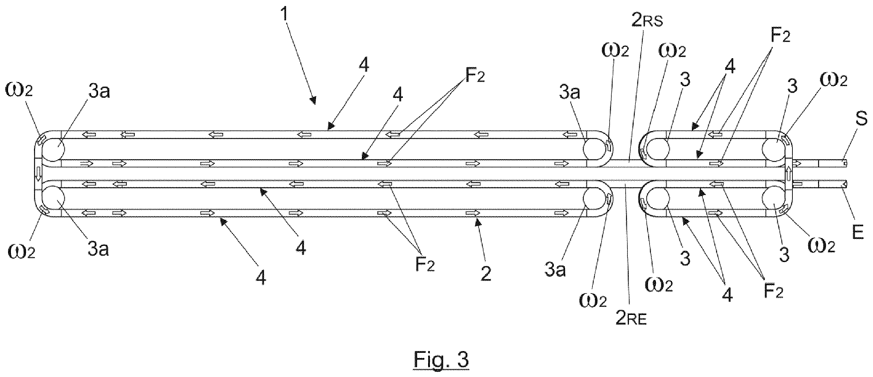

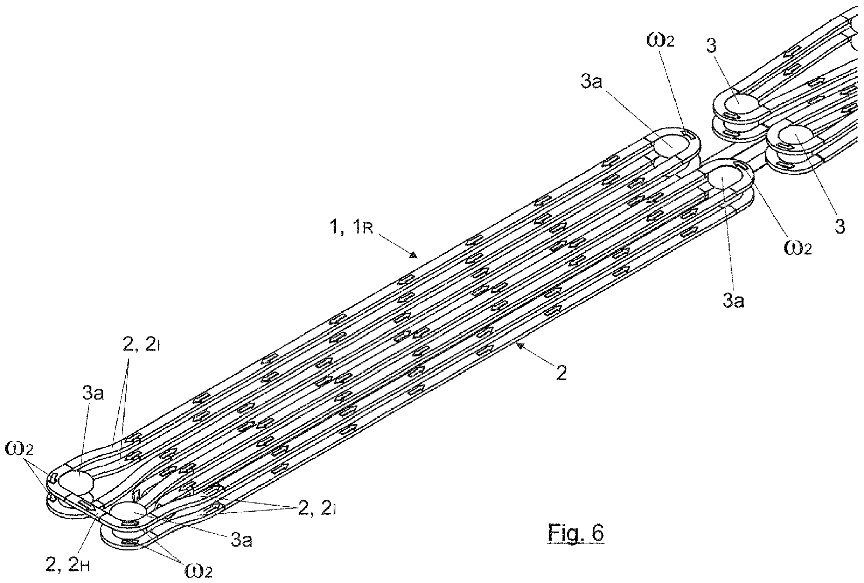

The turns (ω₂) in the conveyor chain (2) are done in the same turn direction, also counterclockwise, figure 6, in its path from the entry regulation point (E_{R}) to the exit regulation point (S_{R,}), said turn direction coinciding with the turn direction of the turns (ω₂) of the conveyor chain (2) in its path from the entry point (E) to the exit point (S), as can be seen in figures 3, 5 and 6.

As can be seen, all of the turns (ω₂) of the conveyor chain (2) in the path from the entry regulation point (E_{R}) to the exit regulation point (S_{R}) are done on the horizontal plane, with all of them in the same counterclockwise turn direction. In the entry regulation point (E_{R}) and the exit regulation point (S_{R}) there are other turns on the vertical plane, these being in the counterclockwise direction and clockwise direction, respectively, to go from the lower face of the conveyor chain (2) to the upper face of the same, and vice versa.

The diverters (3, 3a) located in the moveable carriage (1C) are mobile, moving with the same to increase or reduce the length of the section of the chain in the products zone. Furthermore, the diverters (3, 3a) arranged outside of the moveable carriage (1C) are fixed.

As can be seen in figure 3, the conveyor chain (2) has alternating and opposite advance directions (F₂) between the adjacent channels (4), yet having only one turn direction.

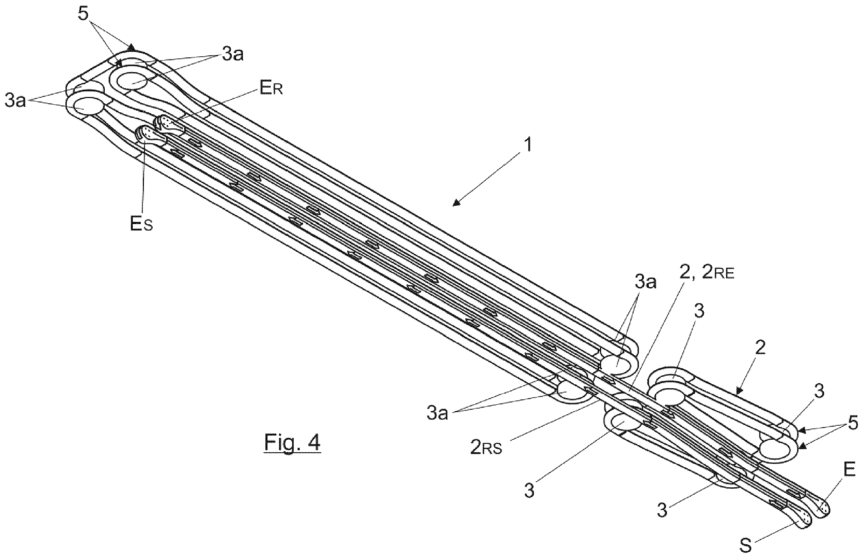

As can be seen in figure 4, the conveyor chain (2) turns around on the lower face of the same to go from the conveyor zone (1T) to the recovery zone (1R) and vice versa.

Figure 5 shows the conveyor zone (1T) of the conveyor device (1) in greater detail. As can be seen, the consecutive diverters (3) arranged at different heights are joined by inclined sections (2_{I}) of the conveyor chain (2). Furthermore, the consecutive diverters (3) arranged at the same height, in this case the two upper diverters shown on the right in figure 5, are joined by a horizontal section (2_{H}) of the conveyor chain (2), which allow the path of the conveyor chain (2) to expand horizontally, increasing the width thereof.

Figure 6 shows the recovery zone (1R) of the conveyor device (1) in greater detail. As can be seen, the consecutive regulation diverters (3a) arranged at different heights are joined by inclined sections (2_{I}) of the conveyor chain (2). Furthermore, the consecutive regulation diverters (3a) arranged at the same height, in this case the two upper diverters shown on the left in figure 6, are joined by a horizontal section (2_{H}) of the conveyor chain (2), which allows the path of the conveyor chain (2) to expand horizontally, that is, increasing the width thereof.

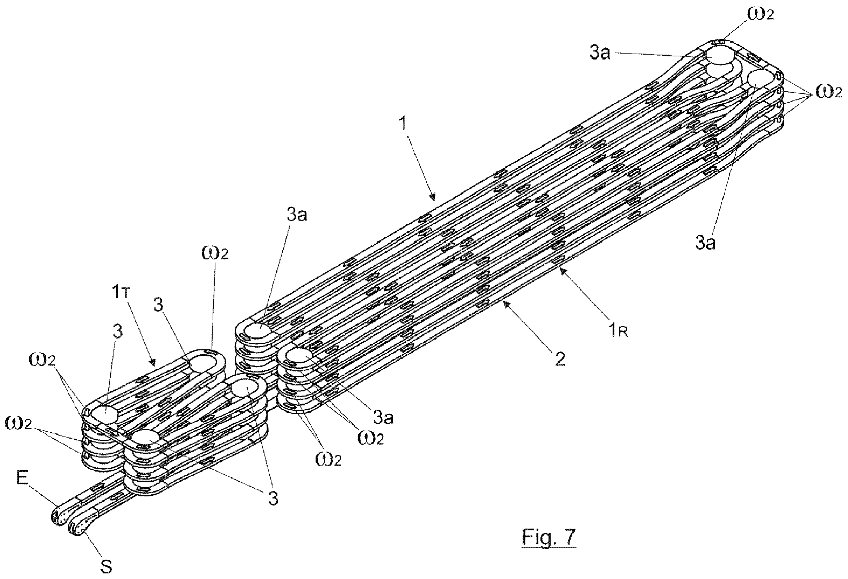

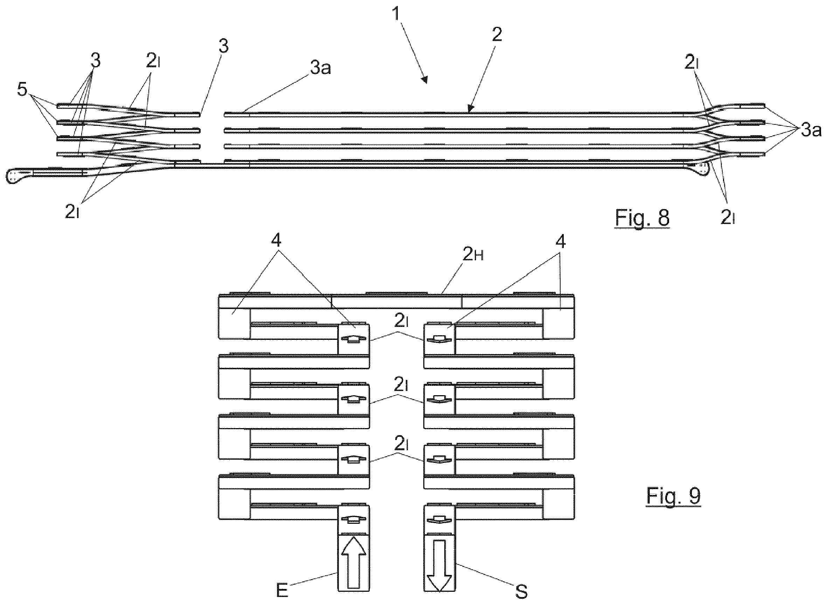

Figures 7 to 9 show different views of the conveyor device (1) of the present invention, according to a second exemplary embodiment. For greater clarity and understanding of the figures, a large part of the structural and functional elements of the conveyor device (1), such as the frame, the casing, the moveable carriage, the motors and traction elements of the conveyor chain, the sliding guides of the carriage, control elements, etc. have not been illustrated.

In said second example, a dynamic flow regulator is shown, also known as an accumulator or buffer, made up of a conveyor zone (1T) and a recovery zone (1R), joined by a moveable carriage, not shown. In this case, the conveyor device (1) comprises four conveyor levels (5), each one with four channels (4). The rest of the technical features of the device (1) coincide with those of the first example.

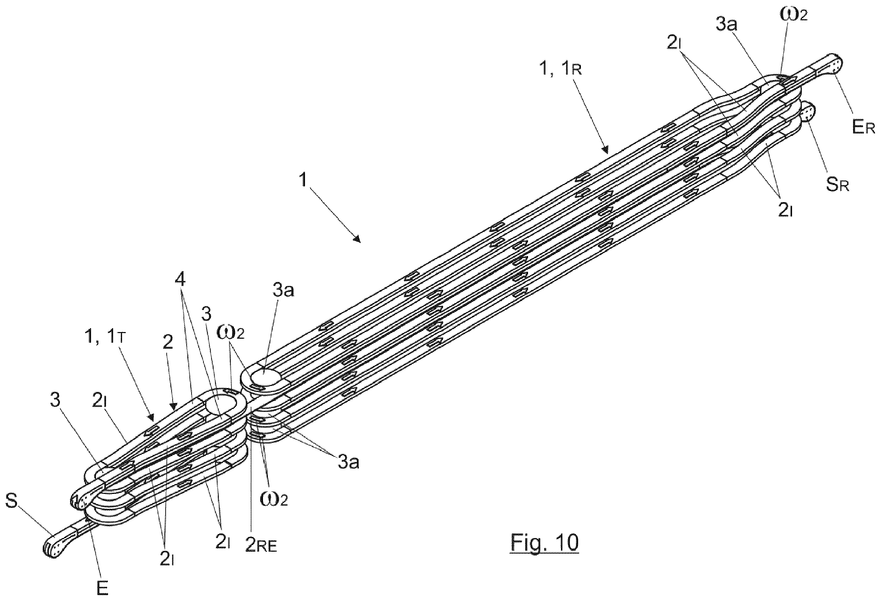

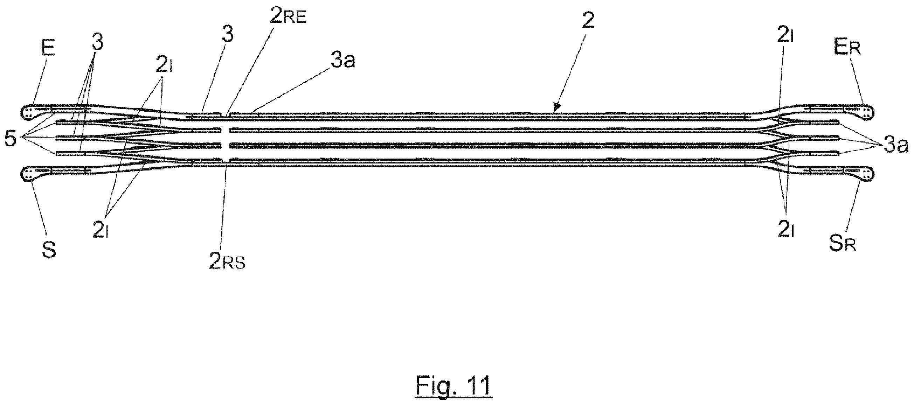

Figures 10 to 11 show different views of the conveyor device (1) of the present invention, according to a third exemplary embodiment. For greater clarity and understanding of the figures, a large part of the structural and functional elements of the conveyor device (1), such as the frame, the casing, the moveable carriage, the motors and traction elements of the conveyor chain, the sliding guides of the carriage, control elements, etc. have not been illustrated.

In said third example, a dynamic flow regulator is shown, also known as an accumulator or buffer, made up of a conveyor zone (1T) and a recovery zone (1R), joined by a moveable carriage, not shown. In this case, the conveyor device (1) comprises four conveyor levels (5), each one with two channels (4). The rest of the technical features of the device (1) coincide with those of the first example.

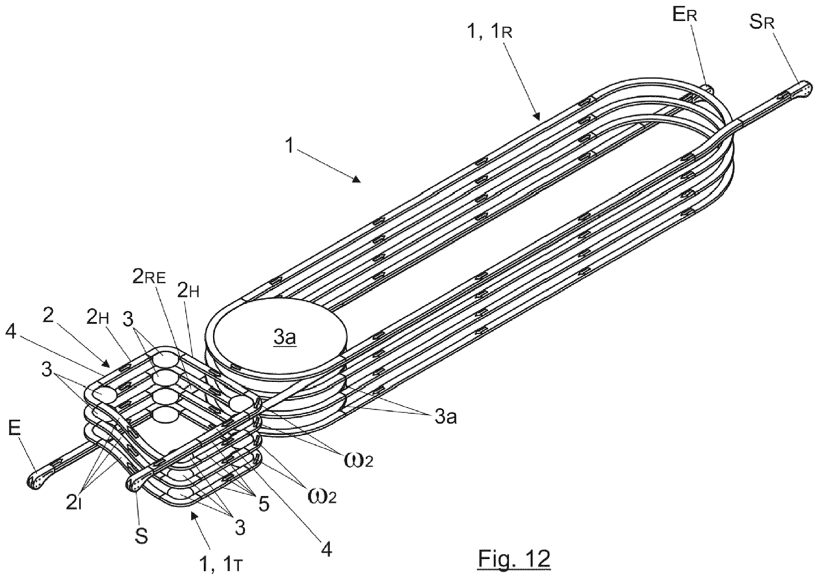

Figure 12 shows a schematic perspective view of the conveyor device (1) of the present invention, according to a fourth exemplary embodiment. For greater clarity and understanding of the figures, a large part of the structural and functional elements of the conveyor device (1), such as the frame, the casing, the moveable carriage, the motors and traction elements of the conveyor chain, the sliding guides of the carriage, control elements, etc. have not been illustrated.

In said fourth example, a dynamic flow regulator is shown, also known as an accumulator or buffer, made up of a conveyor zone (1T) and a recovery zone (1R), joined by a moveable carriage, not shown. In this case, the conveyor device (1) comprises four conveyor levels (5), each one with two channels (4). Unlike the third example, in this case a greater number of diverters (3) per conveyor level (5) are arranged in order to increase the conveying capacity of the same. To this end, each conveyor level (5) has a greater number of consecutive diverters (3) at the same height, joined by corresponding horizontal sections (2_{H}) of the conveyor chain (2). In turn, the consecutive diverters (3) arranged at different heights are joined by corresponding inclined sections (2_{I}), which have a different location with respect to the previous examples.

Furthermore, one can see that the diverters (3, 3a) can have different shapes, sizes and/or constructive configurations, as long as they allow the movement of the conveyor chain (2) to define the curves in the path thereof. Moreover, as can be seen on the right end of the recovery zone (1R), a diverter can consist of a curved configuration of the conveyor chain (2) itself, maintained by other internal or external means of the same.

It is also worth mentioning that, in this case the turns (ω₂) of the conveyor chain (2) are shown in a clockwise direction, although both in this embodiment and the other embodiments, the turn direction can be reversed without affecting the functionality of the present invention. The rest of the technical features of the device (1) coincide with those of the first example.

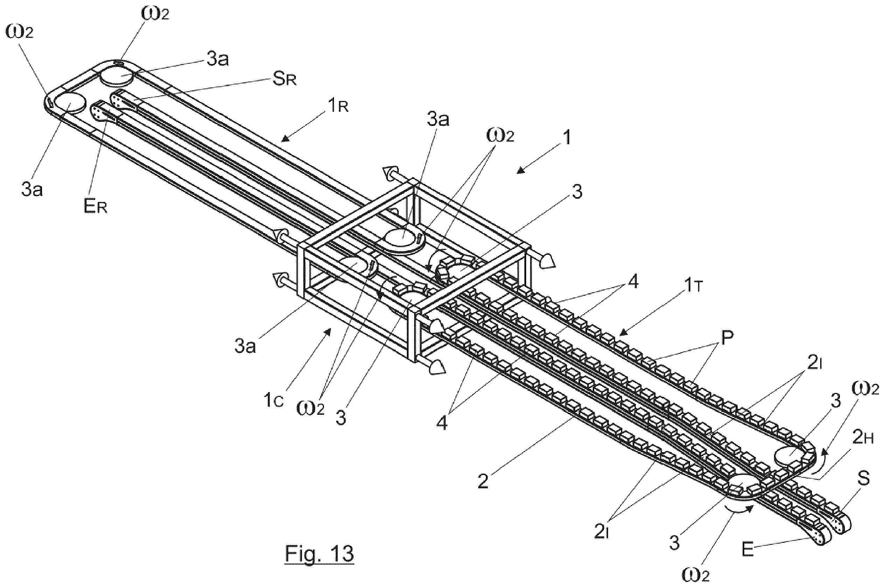

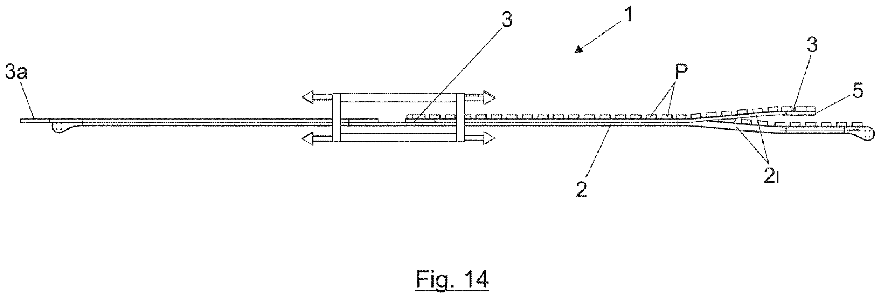

Figures 13 and 14 show different views of the conveyor device (1) of the present invention, according to a fifth exemplary embodiment. For greater clarity and understanding of the figures, a large part of the structural and functional elements of the conveyor device (1), such as the frame, the casing, the motors and traction elements of the conveyor chain, the sliding guides of the carriage, control elements, etc. have not been illustrated.

In said fifth example, a dynamic flow regulator is shown, also known as an accumulator or buffer, made up of a conveyor zone (1T) and a recovery zone (1R), joined by a moveable carriage (1C). In this case, the conveyor device (1) comprises a single conveyor level (5), with four channels (4). The rest of the technical features of the device (1) coincide with those of the first example, unless the regulation diverters (3a) of the recovery zone (1R) are arranged at the same height between the entry regulation point (E_{R}) and the exit regulation point (S_{R}).

As can be seen in figures 13 and 14, even with just one conveyor level (5) the conveyor device (1) comprises a plurality of diverters (3) arranged at different heights between the entry point (E) and the exit point (S), each one of them configured to cause the conveyor chain (2) to turn (ω₂).

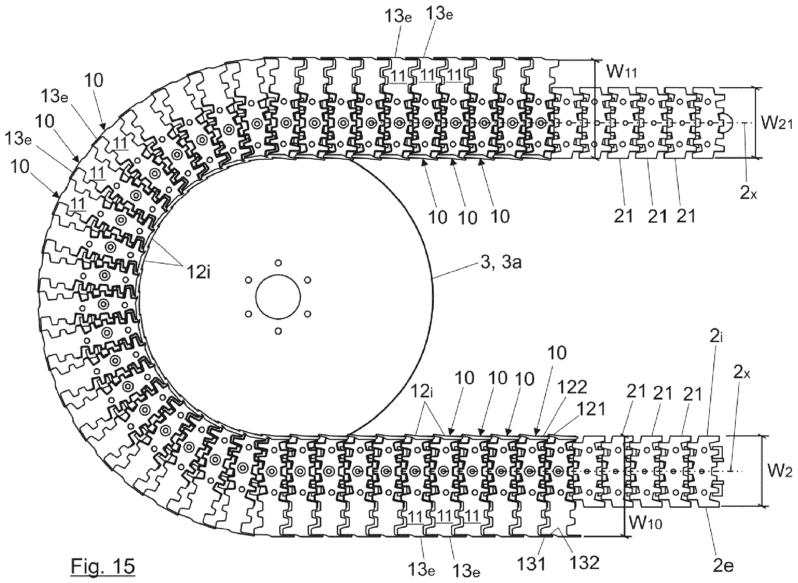

Figure 15 shows a partial plan view of the conveyor chain (2) arranged on a diverter (3, 3a) of the conveyor device (1). As can be seen, the conveyor chain (2) comprises a plurality of guide elements (10) configured to receive the products (P). Said guide elements (10) can be arranged continuously throughout the entire conveyor chain (2), or discontinuously, on only some sections of the same.

The guide elements (10) have an asymmetric arrangement with respect to the axial axis (2x) of the conveyor chain (2), laterally protruding from the outer side (2e) of the conveyor chain (2).

The guide elements (10) individually have a wider width (W₁₀) than the width (W₂) of the conveyor chain (2).

The guide elements (10) can have complementary geometric configuration, designed so that the consecutive guide elements (10) are partially overlapping. This way, the coupling between the consecutive guide elements (10) is devoid of lateral holes or openings on both the inner face (2i) and outer face (2e) of the conveyor chain (2).

The conveyor chain (2) is generally formed by a plurality of links (21) successively joined and with a certain degree of mobility, so that the chain make curves on its path. As will be seen below, the links (21) can be independent form the guide elements (10), or form an integral part of the same. Each guide element (10) comprises a support base (11) configured to receive the products (P), which have a width (W₁₁) greater than the width (W₂₁) of each link (21) of each conveyor chain (2).

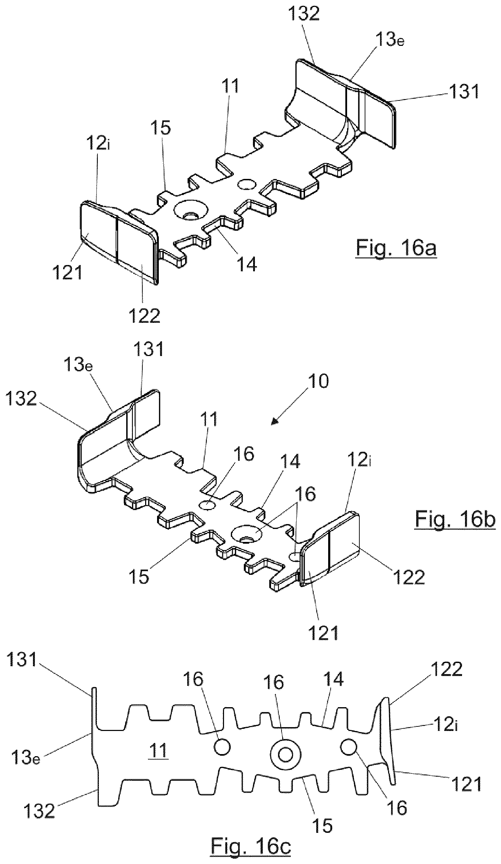

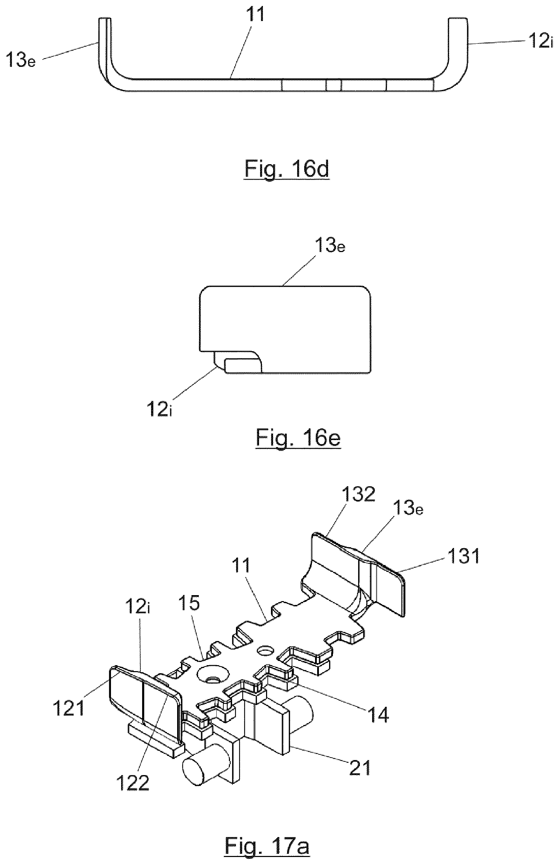

Figures 16a - 16e show different views of a first example of the guide element (10) of the conveyor device (1) for any of the previous embodiments. In this case, each guide element (10) is configured to be mounted on one or more links (21) of the conveyor chain (2) and to be subsequently disassembled.

Each guide element (10) comprises a support base (11) configured to receive the products (P), laterally delimited by an inner wall (12i) and an outer wall (13e), configured to prevent products (P) from falling during the transportation thereof.

The inner wall (12i) comprises:
- an inner overlapping extension (121) configured to overlap with the inner wall (12i) of a front fastening element (10); and
- an inner fitting recess (122) configured to house an inner overlapping extension (121) of a rear fastening element (10).

The outer wall (13e) comprises:
- an outer overlapping extension (131) configured to overlap with the outer wall (13e) of a front fastening element (10); and
- an outer recess (132) configured to house an outer fitting extension (131) of a rear fastening element (10).

Each guide element (10) comprises:
- a first toothed profile (14); and
- a second toothed profile (15) opposite the first toothed profile (14); wherein both toothed profiles (14, 15) are complementary.

Each guide element (10) comprises one or more holes (16) configured for the passage of fastening elements, to allow for the assembly and disassembly thereof on the links (21) of the support chain (2).

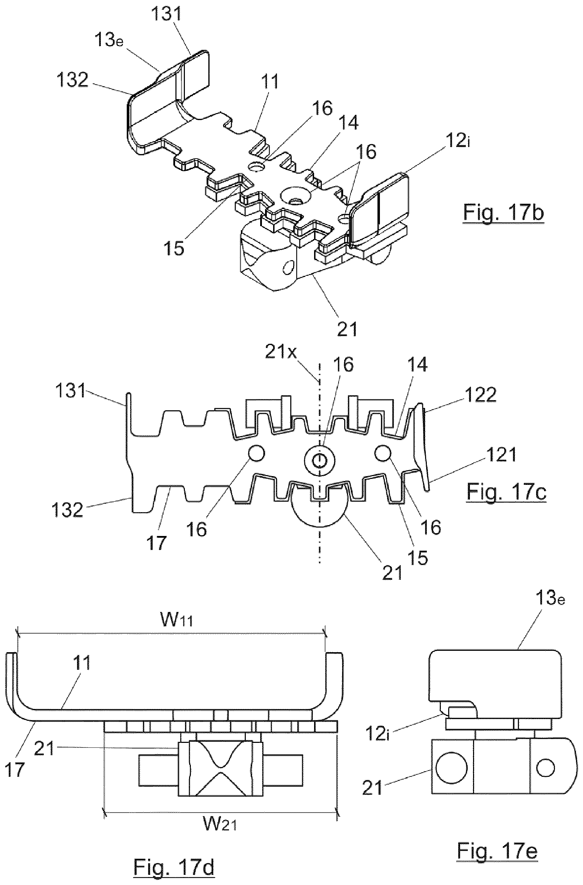

Figures 17a - 17e show different views of a second example of the guide element (10) of the conveyor device (1) for any of the previous embodiments. In this case, each guide element (10) forms an integral part of a link (21) of the conveyor chain (2).

The support base (11) is asymmetrically arranged with respect to the axial axis (21_{X}) of the link (21), comprising an extension (17) that laterally projects from one of the sides of the link (21) on which the outer wall is arranged (13e). The rest of the technical features of the device coincide with those of figures 16a - 16e.

Figures 18 and 19 show two schematic perspective view by way of example of the transport of products (P) by means of a conventional conveyor device. As can be seen, the conveyor chain (2_{P}) is made up of a plurality of links (21_{P}) arranged according to an axial axis (2_{PX}). The conveyor chain (2_{P}) lacks guide elements, such that the products are arranged directly on the links (21_{P}) of the conveyor chain (2_{P}), occupying the central part of the same. In order to prevent the products (P) for piling up on the curves due to a lack of space when the links (21_{P}) make the turn, which causes the consecutive products (P) to move close to each other, it is necessary to create a separation (Sp) between said products (P) by arranging them on the conveyor chain (2_{P}). Said separation (Sp) results in a smaller number and/or density of products (P) throughout the conveyor chain (2_{P}).

Figures 20 and 21 show two schematic perspective views by way of example of the transport of products (P) by means of the conveyor device (1) of the present invention. As can be seen, the conveyor chain (2) comprises a plurality of guide elements (10). Said guide elements (10) have an asymmetric arrangement with respect to the axial axis (2x) of the conveyor chain (2), laterally protruding from the outer side (2e) of the same. The products are arranged directly on the guide elements (10), occupying the outer part of the same and, thus, being off-centered with respect to the axial axis (2x) of the conveyor chain (2) and farther from the inner side of the same (2i). Such that the products (P) have more space on the curves to make the turn, thereby preventing the consecutive (P) products (P) from moving too close together when taking the curves, and/or considerably reducing the likelihood of this happening. This allows the products (P) to be arranged on the guide elements (10) touching one another, meaning with no separation between them, which means there can be a greater number and/or density of products (P) along the conveyor chain (2).

## Claims

1. A conveyor device comprising:
• a conveyor chain (2) arranged to receive a plurality of products (P), which is configured to convey said products (P) from an entry point (E) to an exit point (S) of the same; and
• a plurality of diverters (3) arranged at different heights between the entry point (E) and the exit point (S), each one of which is configured to cause the conveyor chain (2) to turn (ω₂);
said device (1) **characterized in that** the turns (ω₂) of the conveyor chain (2) are made in the same turn direction, clockwise or counterclockwise, in its path from the entry point (E) to the exit point (S).

2. The device according to claim 1, **characterized in that** the consecutive diverters (3) at different heights are joined by inclined sections (2_{I}) of the conveyor chain (2).

3. The device according to any of claims 1 to 2, **characterized in that** it comprises at least two consecutive diverters (3) arranged at the same heights joined by a horizontal section (2_{H}) of the conveyor chain (2).

4. The device according to any of claims 1 to 3, **characterized in that** the conveyor chain (2) forms more than two channels (4) arranged parallel on the same conveyor level (5), said conveyor chain (2) having alternating advance directions (F₂) between adjacent channels (4).

5. The device according to any of claims 1 to 4, **characterized in that** the conveyor chain (2) is configured to move from an entry regulation point (E_{R}) to an exit regulation point (S_{R}), wherein said conveyor chain (2) comprises:
• an entry return section (2_{RE}) that joins the conveyor chain (2) to the entry point (E) and to the entry regulation point (E_{R}); and
• an exit return section (2_{RS}) that joins the conveyor chain (2) to the exit point (S) and to the exit regulation point (S_{R}).

6. The device according to claim 5, **characterized in that** it comprises:
• a plurality of regulating diverters (3a) arranged at the same or different heights between the entry regulation point (E_{R}) and the exit regulation point (S_{R}), each one of which is configured to make the conveyor chain (2) turn (ω₂);
wherein the turns (ω₂) of the conveyor chain (2) are made in the same turn direction, clockwise or counterclockwise, in its path from the entry regulation point (E_{R}) to the exit regulation point (S_{R}), said turn direction coinciding with the turn direction of the turns (ω₂) of the conveyor chain (2) in its path from the entry point (E) to the exit point (S).

7. The device according to claim 6, **characterized in that** the consecutive regulation diverters (3a) at different heights are joined by inclined sections (2_{I}) of the conveyor chain (2).

8. The device according to any of claims 1 to 7, **characterized in that** the conveyor device (1) is an accumulator or dynamic flow regulator.

9. The device according to any of claims 1 to 8, **characterized in that** the conveyor chain (2) comprises a plurality of guide elements (10) configured to receive the products (P).

10. The device according to claim 9, **characterized in that** the guide elements (10) have an asymmetric arrangement with respect to the axial axis (2x) of the conveyor chain (2).

11. The device according to any of claims 9 to 10, **characterized in that** the guide elements (10) laterally protrude from an outer side (2e) of the conveyor chain (2).

12. The device according to any of claims 9 to 11, **characterized in that** the guide elements (10) individually have a width (W₁₀) greater than the width (W₂) of the conveyor chain (2).

13. The device according to any of claims 9 to 12, **characterized in that** each guide element (10) comprises a support base (11) configured to receive the products (P), laterally delimited by an inner wall (12i) and an outer wall (13e), configured to prevent products (P) from falling during the transportation thereof.

14. The device according to claim 13, **characterized in that** the inner wall (12i) comprises:
• an inner overlapping extension (121) configured to overlap with the inner wall (12i) of a front fastening element (10); and
• an inner fitting recess (122) configured to house an inner overlapping extension (121) of a rear fastening element (10).

15. The device according to any of claims 13 to 14, **characterized in that** the outer wall (13e) comprises:
• an outer overlapping extension (131) configured to overlap with the outer wall (13e) of a front fastening element (10); and
• an outer fitting recess (132) configured to house an outer fitting extension (131) of a rear fastening element (10).
